# EUROPEAN PATENT SPECIFICATION

(11) **EP 0 395 090 B1**
(45) Date of publication and mention of the grant of the patent: **04.09.1996**
(21) Application number: 90108073.9
(22) Date of filing: 27.04.1990
(51) Int. Cl.: G06F 17/16, G06K 15/02, G09G 1/00

(54) **Character pattern data generating device**
Erzeugungsvorrichtung von Zeichenmusterdaten
Dispositif générateur de données de motif de caractère

(30) Priority: 28.04.1989 JP 109612/89
(43) Date of publication of application: 31.10.1990
(73) Proprietor: SEIKO EPSON CORPORATION, Shinjuku-ku Tokyo (JP)
(72) Inventor: Kagita, Osamu, c/o Seiko Epson Corporation, Suwa-shi, Nagano (JP)
(74) Representative: Diehl, Hermann O. Th., Dr.

(56) References cited:
- EP-A- 0 205 767
- EP-A- 0 292 896
- FR-A- 2 553 208

## Description

The present invention relates to a character pattern data generating device.

Improvements in printing resolution of printers have promoted many kinds of font to be developed and used, and to actually use various fonts, numerous kinds of bit pattern data must be stored. Because a means for storing these data must necessarily be of large capacity, the cost will be increased.

For example, FR-A-2 553 208 discloses the use of look-up-tables to identify the base addresses of bit map patterns of characters to be printed numerous of which are prestored in a bit pattern ROM memory. Also, EP-A0 205 767 uses a character pattern memory means which stores character pattern data. It allows to logically assign a typeface/font information in the data stream received from an external apparatus (e.g. a host computer) to a physical memory range containing the pattern data for the selected typeface/font.

To reduce the amount of data transferred through a microprocessor in such prior art systems and to reduce the time required for such transfers, EP-Ao 292 896 discloses a font data processor which autonomously transforms bit patterns of characters to the desired shapes, based on font pattern access parameters and pattern drawing attribute defining parameters. Still, large memory capacities are required.

As a solution to the problem, a bit pattern data generating device has been proposed. First, this device makes a preparation by storing the pattern of a character or a graphic in the form of coordinate data of its outline, or the so-called "outline data," in a storage means; reading the outline data of a required font through a keyboard at printing or prior to displaying; generating bit pattern data based on the read outline data; and temporarily storing the generated bit pattern data in a random access memory (RAM). Thereafter, this device reads the bit pattern data stored in the RAM through an externally applied character code signal thereby to cause the character or graphic pattern to be printed with the desired font.

According to this device, the capacity of the storage means for storing fonts can be curtailed, thereby contributing to reducing the cost; however, the additional procedural operation for generating bit pattern data and temporarily storing the generated bit pattern data is required every time the printer or display unit is started, thereby being disadvantageous to the user in that it entails the additional, repetitive operation.

An object of the present invention is to overcome the above problem and thereby to provide an improved novel bit or character pattern data generating device. This object is solved by the character pattern data generating device of independent claim 1. Further advantageous features of this device are evident from the dependent claims. In the device of the invention required fonts are stored in a non-volatile memory as attribute data and a font is generated automatically based on the attribute data at the time of starring the printer thereby to dispense with the cumbersome operation of specifying the character generation. The invention provides a device for producing bit pattern data adapted to displaying and printing a character or pattern corresponding to a character code signal based on bit map data.

Further features and advantages of the invention will become evident from the following description and the drawings.
Fig. 1 is a block diagram showing a device that is an embodiment of the present invention;
Fig. 2 is a schematic representation showing an embodiment of a menu data storage circuit in the device of Fig. 1;
Fig. 3 is a schematic representation showing the structure of a circuit for storing set data;
Fig. 4 is a front view showing an embodiment of a panel screen in the device of Fig. 1;
Fig. 5 is a flow chart showing the operation when the font creating data is stored in the device of Fig. 1; and
Fig. 6 is a diagram explaining the process of generating a character in the device of Fig. 1.

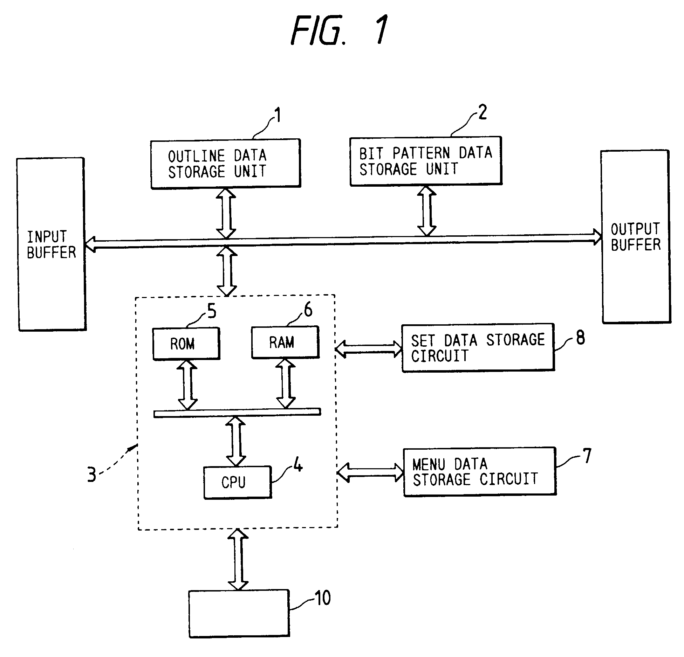

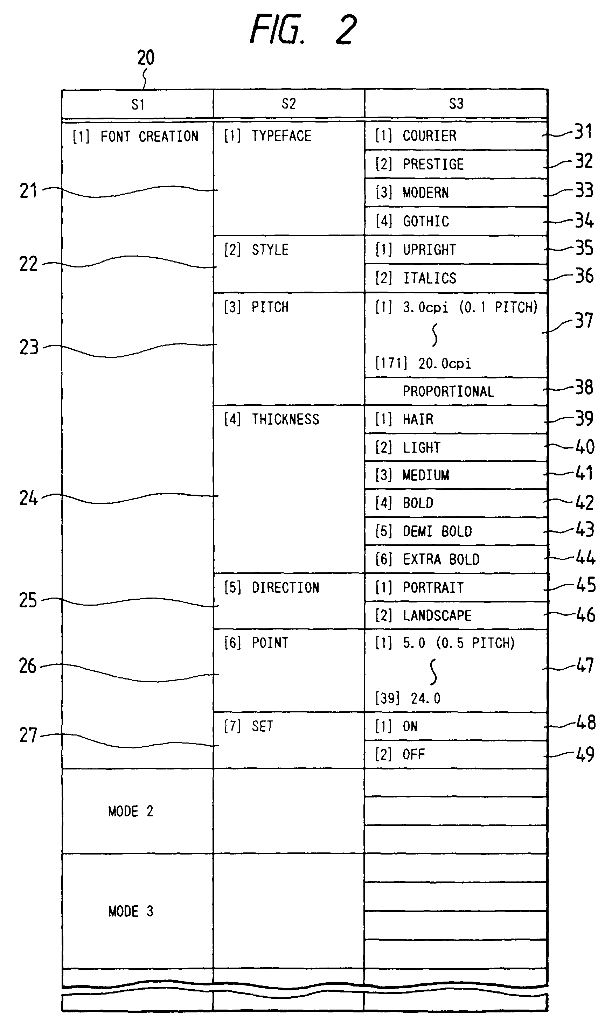

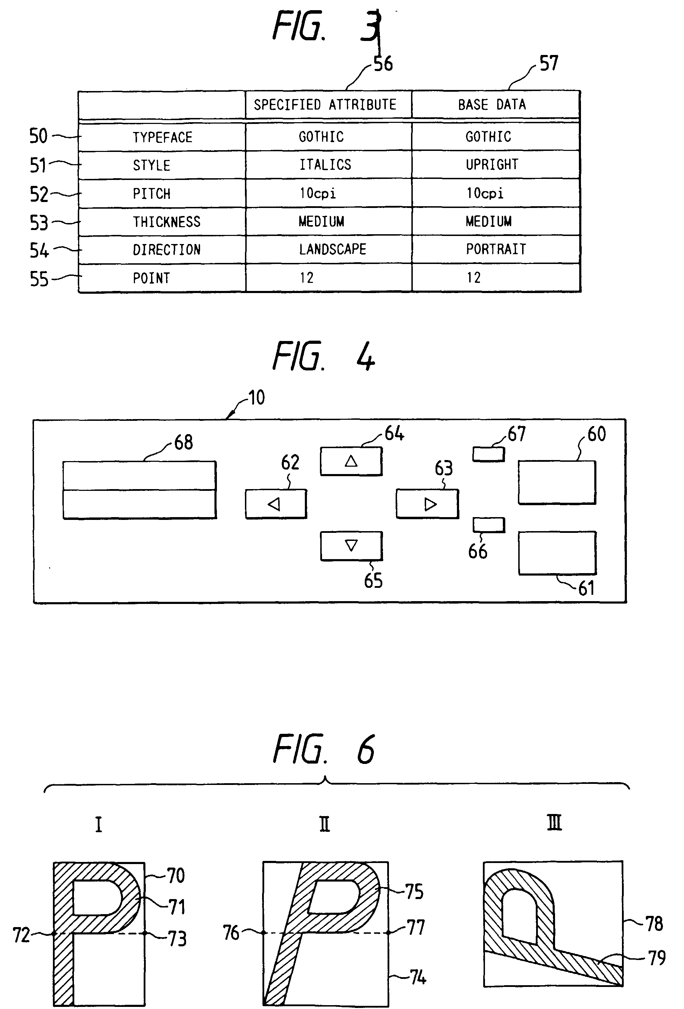

Fig. 1 shows an embodiment of the present invention. Referring to the figure, reference numeral 1 designates an outline data storage unit, in which outlines of characters and graphics are stored as coordinate data; and 2, a bit pattern data storage unit, which erasably maintains bit pattern data generated by a microcomputer 3 (described later) based on the outline data; thus it is made up of a RAM.

Reference numeral 3 designates the microcomputer including a central processing unit (CPU) 4, a read only memory (ROM) 5, and a RAM 6; 7, a menu data storage circuit, which includes, as shown in Fig. 2, a mode selection area 20 for selecting a mode, e.g., "font creation" out of various modes; a mode detail area for each mode, which is subdivided into items such as "typeface" 21, "style" 22, "pitch" 23, "thickness" 24, "direction" 25, "point" 26, and "set" 27 in case of the "font creation" mode, and each item contains its own detailed data.

More specifically, the item "typeface" 21 contains data "courier" 31, "prestige" 32, "modern" 33, "gothic" 34; the item "style" 22 contains data "upright" 35, "italics" 36; the item "pitch" 23 contains pitch data 37 from 3.0 CPI to 20.0 CPI every 0.1 pitch and "proportional" 38; the item "thickness" 24 contains data "hair" 39, "light" 40, "medium" 41, "bold" 42, "demibold" 43, and "extra bold" 44; the item "direction" 25 contains data "portrait" 45 and "landscape" 46; the item "point" 26 contains data 47 indicating the size of points from 5.0 to 24 points every 0.5 point; and the item "set" 27 contains data "ON" 48 for specifying that the set data be saved in the storage circuit and data "OFF" 49 for specifying not to save the set data.

Returning to Fig. 1, reference numeral 8 designates a set data storage circuit, which is made up of an erasable nonvolatile memory and consists of areas 50 to 55 in correspondence with the items 21 to 26, a specified attribute area 56, and a base data area 57 as shown in Fig. 3. This base data area 57 is arranged so that it will contain material data for creating the font specified by the specified attribute area 56.

Reference numeral 10 designates the panel screen, which comprises, as shown in Fig. 4, an online selection key 60, a mode selection key 61, cursor movement keys 62, 63, 64, and 65 for selecting the items on the menu screen, a confirmation key 66, a key 67, and a display unit 68 of a liquid crystal system or the like.

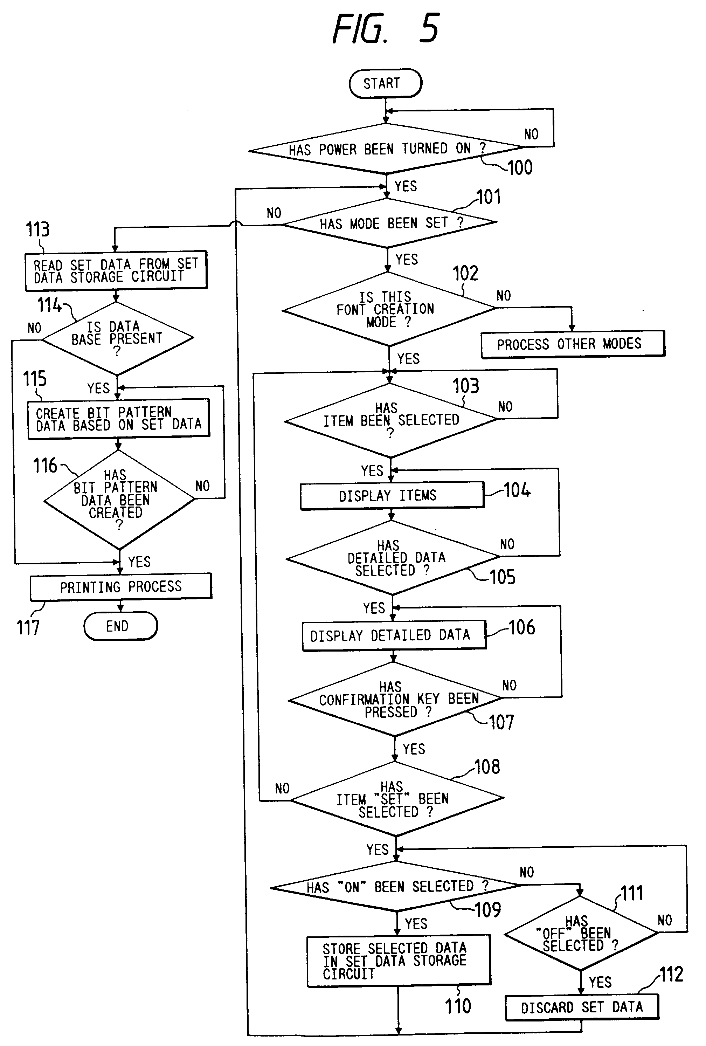

The operation of the bit pattern data generating device thus constructed will be described with reference to the flow chart shown in Fig. 5.

### [Registration of the font]

Upon turning the power on (Step 100) the microcomputer 3 is set to the print mode as a default. When the mode selection key 61 is pressed under this condition (Step 101), the microcomputer 3 prompts for mode setting without generating characters. When, e.g., the cursor movement keys 64 and 65 for vertical movement out of the keys 62 to 66 are pressed, the respective modes stored in the menu data storage circuit 7 will be sequentially displayed.

When the "font creation" menu is displayed by using the vertical movement keys 64 and 65 (Step 102) and the cursor movement keys 62 and 63 for horizontal movement are pressed, the "typeface" 21, which is the first item of the "font creation" mode 20, is displayed (Steps 103 and 104). As the cursor movement keys 64 and 65 for vertical movement are pressed under this condition, the detailed data "courier" 31, "prestige" 32, "modern" 33, and "gothic" 34 are displayed in the order written on the display unit 68 every time these keys are pressed (Steps 105 and 106). When the confirmation key 66 is pressed with a desired typeface, e.g., "gothic", being displayed in this way (Step 107), the microcomputer 3 temporarily stores this data in a buffer or the like (not shown) and jumps to Step 103. Upon completion of the registration of the item "typeface" 21, the cursor movement keys 64 and 65 for vertical movement are pressed. Then, the next item "style" 22 will be displayed. As the cursor movement keys 62 and 63 for horizontal movement are pressed with the "style" 22 being displayed on the screen and subsequently the cursor movement keys 64 and 65 for vertical movement are pressed, the detailed data, "upright" 35 and "italics" 36, are displayed on the display unit 66 in the order of the pressed keys. If the confirmation key 68 is pressed with "italics" 36 being displayed, the microcomputer 3 temporarily stores "italics" 36 in the buffer or the like.

Upon completion of the setting of one item in this way, the cursor movement keys are operated to move on to the next item and specify attributes as required on the item, and the confirmation key is pressed to confirm the specification.

In line with the specification of the attributes, base data necessary to generate the character having the specified attributes must also be specified.

When the setting of the items in the "font creation" mode has been completed up to the item "point," the item "set" 27 is called (Step 108). As its detailed data "ON" 48 is selected (Step 109), the microcomputer 3 transfers the data of the selected item from the buffer to the set data storage circuit 8, and sets the data "gothic," "italics," "10 CPI," "medium," "landscape," and "12" to the set attribute area 56, and the data "gothic," "upright," "10 CPI," "medium," "portrait," and "12" to the base data area 57, as shown in Fig. 3 (Step 110).

If the data "OFF" is selected in the item "set" (Step 111), the microcomputer 3 discards the data just specified (Step 112) and jumps to Step 101.

### [Normal mode]

When the power is turned on to start the bit pattern data generating device with the data necessary to create a font stored in the set data storage circuit 8 (Step 100), the microcomputer 3 first accesses the set data storage circuit 8 to read the stored "font creation" data (Step 113) and checks whether or not the font of specified base data (Fig. 3) has been prepared (Step 114). If the font that serves as the basis for a font to be created does not exist, the operation is terminated. Conversely, if the base data does exist, the operation of creating a new font is executed based on the specified base data (Step 115). In parallel with this operation, the operation of warming up a printing mechanism (not shown) will be performed.

The above-described process of generating a character will now be described taking the character "P" shown in Fig. 6 as an example. The microcomputer 3 reserves an area 70 for storing one character in the work area to create an italicized character and reads the standard font data "P" from the outline data storage unit 1. The font data "P" is then converted to bit pattern data 71 to create the base data bit pattern (part I of Fig.6). The bit pattern data 71 is provided with a reference point 72 referencing a predetermined printing area and a base line 73. Upon creation of the base data bit pattern in this way, a work area 74 for a next character will be reserved thereby to create bit pattern data 75 for the italicized character based on the base data bit pattern (part I). The bit pattern data 75 thus created is likewise provided with a reference point 76 referencing a predetermined printing area and a base line 77. According to the data 75, the character "P" will be created so that the portion over the base line 77 is shifted to the right from the reference point and the portion below the base line *is* shifted to the left (part II).

The landscape character of the character "P" will be generated by creating data in which the bit pattern data 75 is 90° rotated (part III).

In this way, when the bit pattern data of all the characters are stored in the bit pattern data storage circuit 2 (Step 116), printing is ready (Step 117). Thus, character fonts can be prepared automatically without being specified by the user.

### [Change of the character fonts]

To alter the font that has already been specified at the start, e.g., "italics" in the item "style" to "upright," first, the "font creation" mode is selected by pressing the mode selection key 61 on the panel screen 10 as described previously. Then, calling the items 21 to 26 by operating the cursor movement keys 62 and 63 for horizontal movement to display the item to be altered, e.g., "style" 22 on the display unit 66. Under this condition, the cursor movement keys 62 and 63 for horizontal movement are pressed again to select and display the target data "upright" 35 on the display unit 66.

Upon completion of all necessary alternations, "set" 27 is selected by operating the cursor movement keys 64 and 65 for vertical movement, and its detailed data of "ON" 48 is selected by the cursor movement keys for horizontal movement.

As a result, the microcomputer 3 updates the data resident in the set data storage circuit 8 by the altered data and exits from the setting mode.

Although the menu items are displayed sequentially on a single item basis to minimize the size of the display unit in this embodiment, in the case where a large display unit is used, it goes without saying that a plurality of menu items may be displayed at once on the display unit and that the item selection is made by the numeric keys or cursor movement keys.

## Claims

1. A character pattern data generating device, comprising: outline data storage means (1) for storing outline data of fonts;
character data storage means (2) for storing a set of bit patterns (79) for characters of a required font;
means (3,7,10) for externally specifying attribute data (56) of said required font and for externally specifying base attribute data (57) corresponding to a font stored in said outline data storage means that is required to generate said set of bit patterns (79) for characters specified by said attribute data (56);
specified data storage means (8) for storing said specified attribute data (56) and said base attribute data (57); and
means (3) for, at turning on of an electric power source, reading said specified attribute data (56) and base attribute data (57) from said specified data storage means;
for applying said specified attribute data (56) and base attribute data (57) read from said specified data storage means (8) to outline data of a font stored in said outline data storage means (1) to generate said set of bit patterns (79) for characters of said required font;
and for storing said generated set of bit patterns for characters of said required font in said character data storage means (2).

2. A character pattern data generating device as claimed in claim 1, further comprising means (10) for displaying said specified attribute data (56) and said base attribute data (57) in a menu form.

3. A character pattern data generating device as claimed in claim 2, said means (10) for displaying further comprising cursor movement keys (62,63,64,65) for selecting said specified attribute data and said base attribute data.

## Patentansprüche

1. Zeichenmusterdatenerzeugungsvorrichtung mit:
Umrißdatenspeichermitteln (1) zur Speicherung von Umrißdaten von Fonts;
Zeichendatenspeichermitteln (2) zur Speicherung eines Satzes von Bitmustern (79) für Zeichen eines benötigten Fonts;
Mitteln (3, 7, 10) zur externen Spezifizierung von Attributdaten (56) des benötigten Fonts und zur externen Spezifizierung von Basisattributdaten (57) entsprechend einem in den Umrißdatenspeichermitteln gespeicherten Font, welcher zur Erzeugung des Satzes von Bitmustern (79) für Zeichen, welche durch die Attributdaten (56) spezifiziert sind, benötigt wird.
Mitteln (8) zur Speicherung spezifizierter Daten zur Speicherung der spezifizierten Attributdaten (56) und der Basisattributdaten (57); und
Mitteln (3) zum Lesen der spezifizierten Attributdaten (56) und der Basisattributdaten (57) von den Mitteln zur Speicherung spezifizierter Daten bei Anschalten einer elektrischen Energiequelle;
zur Anwendung der von den Mitteln (8) zur Speicherung spezifizierter Daten gelesenen spezifizierten Attributdaten (56) und Basisattributdaten (57) auf Umrißdaten eines Fonts, welche in den Umrißdatenspeichermitteln (1) gespeichert sind, um den Satz von Bitmustern (79) für Zeichen des benötigten Fonts zu erzeugen;
und zur Speicherung des erzeugten Satzes von Bitmustern für Zeichen des benötigten Fonts in den Zeichendatenspeichermitteln (2).

2. Zeichenmusterdatenerzeugungsvorrichtung gemäß Anspruch 1, die des weiteren Mittel (10) zur Anzeige der spezifizieren Attributdaten (56) und der Basisattributdaten (57) in Menüform aufweist.

3. Zeichenmusterdatenerzeugungsvorrichtung gemäß Anspruch 2, wobei die Mittel (10) zur Anzeige des weiteren Cursorbewegungstasten (62, 63, 64, 65) zur Auswahl der spezifizierten Attributdaten und der Basisattributdaten aufweisen.

## Revendications

1. Dispositif de génération de données de motif de caractère comprenant :
des moyens de stockage de données de contour (1) pour stocker des données de contour de polices ;
des moyens de stockage de données de caractères (2) pour stocker un jeu de motifs binaires (79) pour des caractères d'une police requise ;
des moyens (3, 7, 10) pour spécifier de façon externe des données d'attribut (56) de ladite police requise et pour spécifier de façon externe des données d'attribut de base (57) correspondant à une police stockée dans lesdits moyens de stockage de données de contour qui est requise pour générer ledit jeu de motifs binaires (79) pour des caractères spécifiés par lesdites données d'attribut (56) ;
des moyens de stockage de données spécifiées (8) pour stocker lesdites données d'attribut spécifiées (56) et lesdites données d'attribut de base (57) ; et
des moyens (3) pour, lors de la mise en marche d'une source d'énergie électrique, lire lesdites données d'attribut spécifiées (56) et lesdites données d'attribut de base (57) dans lesdits moyens de stockage de données spécifiées ; pour appliquer lesdites données d'attribut spécifiées (56) et lesdites données d'attribut de base (57) lues dans lesdits moyens de stockage de données spécifiées (8) sur des données de contour d'une police stockées dans lesdits moyens de stockage de données de contour (1) pour générer ledit jeu de motifs binaires (79) pour des caractères de ladite police requise ; et pour stocker ledit jeu généré de motifs binaires pour des caractères de ladite police requise dans lesdits moyens de stockage de données de caractère (2).

2. Dispositif de génération de données de motif de caractère selon la revendication 1, comprenant en outre des moyens (10) pour afficher lesdites données d'attribut spécifiées (56) et lesdites données d'attribut de base (57) sous la forme d'un menu.

3. Dispositif de génération de données de motif de caractère selon la revendication 2, lesdits moyens (10) pour afficher comprenant en outre des- touches de déplacement de curseur (62, 63, 64, 65) pour sélectionner lesdites données d'attribut spécifiées et lesdites données d'attribut de base.
